# EUROPÄISCHE PATENTSCHRIFT

(11) **EP 1 470 356 B1**
(45) Veröffentlichungstag und Bekanntmachung des Hinweises auf die Patenterteilung: **17.05.2006**
(21) Anmeldenummer: 03700282.1
(22) Anmeldetag: 21.01.2003
(51) Int. Cl.: F16L 13/14, F16L 33/207

(54) **PRESSVERBINDUNG**
PRESS CONNECTION
ASSEMBLAGE PAR COMPRESSION

(30) Priorität: 28.01.2002 CH 138022002
(43) Veröffentlichungstag der Anmeldung: 27.10.2004
(73) Patentinhaber: GEBERIT TECHNIK AG, 8645 Jona (CH)
(72) Erfinder: SCHOLZ, Jürg, CH-8841 Gross (CH); WILI, Hansruedi, CH-8645 Jona (CH); KIRCH, Michael, CH-8304 Wallisellen (CH)
(74) Vertreter: Groner, Manfred
(86) Internationale Anmeldenummer: PCT/CH2003/000038
(87) Internationale Veröffentlichungsnummer: WO 2003/064912

(56) Entgegenhaltungen:
- WO-A-98/05897
- DE-C- 10 010 573
- DE-C- 10 137 078
- GB-A- 2 254 389
- US-A- 5 378 023
- US-A- 6 145 892

## Beschreibung

Die Erfindung betrifft eine Pressverbindung nach dem Oberbegriff des Anspruchs 1. So offenbart beispielsweise die DE 298 13 935 U eine unlösbare Pressverbindung zwischen einer Muffe und einem Metallrohrende, bei welcher der Dichtungsring in eine Nut der Muffe eingelegt ist. Nach dem Einstecken des anzuschliessenden Rohrendes in die Muffe ist eine Leckstelle vorhanden, die nach dem Verpressen der Muffe geschlossen ist. Diese Leckstelle soll sicherstellen, dass eine versehentlich nicht verpresste Muffe infolge der Undichtigkeit an der Leckstelle erkannt wird. Die Leckstelle wird mit einem Dichtring erreicht, der eine besondere unrunde Kontur aufweist. Solche Dichtringe müssen speziell hergestellt werden und sind deshalb vergleichsweise teuer.

Die US 5,378,023 bzw. die EP 0 513 292 B1 offenbart eine Pressverbindung zwischen einem Doppelfitting und auf diesem aufgeschobene Rohrenden. Eine Leckstelle ist bei dieser Verbindung nicht vorgesehen. Ist ein Rohrende versehentlich nicht verpresst worden, so kann der Fitting bei üblichem Wasserdruck trotzdem dicht sein, sodass eine fehlende Verpressung zunächst nicht erkannt wird. Erhöht sich der Wasserdruck, so wird der Fitting undicht und es kann ein hoher Bauschaden entstehen. Eine Undichtigkeit kann bei dieser Verbindung auch dann entstehen, wenn ein Rohrende nicht sorgfältig entgratet und dadurch der Dichtungsring bzw. die Dichtungsringe verletzt werden. Auch hier besteht die Gefahr, dass eine solche Undichtigkeit erst später nach Druckschwankungen in der Leitung entstehen.

Die gattungsbildende DE-A-101 37 078 (WO 03/012328 A) offenbart einen Pressfitting, der an seiner Aussenseite zwei Dichtungsringe aufweist, die jeweils in eine umlaufende Nut eingelegt sind. Damit die Dichtungsringe beim Aufschieben eines Rohrendes nicht beschädigt werden, sind die Dichtungsringe jeweils vollständig innerhalb der entsprechenden Nut angeordnet. Eine vorgesehene Presshülse besitzt zwei Verformungsansätze, die beim Verpressen des Rohrendes zur Abdichtung des Rohres jeweils in eine Ringnut gepresst werden.

Die US-A-6,145,892 offenbart eine Pressverbindung sowie ein Presswerkzeug. Das Presswerkzeug weist zwei Konturen auf, mit denen ein auf einen Fitting aufgeschobenes Rohrende neben einem Dichtungsring verpresst wird.

Der Erfindung liegt die Aufgabe zugrunde, eine Pressverbindung der genannten Art zu schaffen, die eine höhere Sicherheit bietet, aber trotzdem einfach und kostengünstig herstellbar und montierbar ist.

Die Aufgabe ist bei einer gattungsgemässen Pressverbindung gemäss Anspruch 1 gelöst. Bei der erfindungsgemässen Pressverbindung weist die Nut an der Aussenseite des Fittings einen im Querschnitt des Fittings unrunden Nutengrund auf. Dies hat zur Folge, dass ein etwas gespannt in die Nut eingelegter Dichtungsring mit seinem Umfang unterhalb der Aussenseite des Fittings liegt und sich dadurch bei noch nicht verpresstem Rohrende eine Leckage ergibt. Bei der erfindungsgemässen Pressverbindung kann mit Unterschied des Aussendurchmessers der Dichtungsring wie üblich ausgebildet sein, d.h. er kann einen kreisrunden Querschnitt aufweisen. Aufgrund des genannten Unterschiedes in den Durchmessern, wird der Dichtungsring beim Aufschieben des anzuschliessenden Rohrendes von diesem wenigstens bereichsweise nicht berührt. Eine nicht entgratete Stirnfläche kann deshalb den Dichtungsring nicht verletzen, was dann gilt, wenn der Dichtungsring über seinen ganzen Umfang einen kleineren Aussendurchmesser aufweist. Wird das Rohrende versehentlich nicht verpresst, so besteht eine Leckstelle zwischen der Aussenseite des Dichtungsringes und der Innenseite des nicht verpressten Rohrendes. Ein nicht verpresstes Rohrende wird somit auch bei niedrigem Wasserdruck sofort erkannt. Bauschäden aufgrund eines nicht entgrateten Rohrendes oder einer fehlenden Verpressung können damit wirksam vermieden werden. Höhere Kosten als bei üblichen Pressverbindungen entstehen nicht. Ein weiterer Vorteil der Erfindung besteht darin, dass vergleichsweise hohe Toleranzen zwischen Rohrende und Fitting ohne Beeinträchtigung der Dichtigkeit und der Festigkeit der Verbindung möglich sind.

Die Erfindung betrifft nach Anspruch 9 zudem ein besonders geeignetes Presswerkzeug und ein Fitting gemäss Anspruch 1 zur Herstellung der Pressverbindung gemäss Anspruch 1. Die beiden Pressbacken dieses Presswerkzeuges weisen jeweils eine erste Kontur für eine Führung der Pressbacken an einem Bund des Fittings und eine zweite Kontur zum Kaltformen des Rohrendes im Bereich des Dichtungsringes sowie eine dritte Kontur zum Kaltverformen des Rohrendes am freien Ende des Fittings auf. Durch die Verpressung des Rohrendes im Bereich des Dichtringes kann eine hohe Dichtigkeit und gleichzeitig eine Fixierung des Rohrendes am Fitting erreicht werden. Eine besonders hohe Festigkeit der Verbindung wird dann erreicht, wenn gleichzeitig eine Presshülse verpresst wird. Eine besonders einfache Montage ergibt sich dann, wenn die Presshülse am Fitting befestigt und somit vormontiert ist. Diese Befestigung erfolgt vorzugsweise durch Aufschnappen der Presshülse an einem Bund des Fittings.

Ausführungsbeispiele der Erfindung werden nachfolgend anhand der Zeichnung näher erläutert. Es zeigen:
- Figur 1: ein Längsschnitt durch eine Pressverbindung, wobei eine obere Hälfte ein noch nicht verpresstes Rohrende und eine untere Hälfte ein verpresstes Rohrende zeigt,
- Figur 2: ein Querschnitt durch eine Variante der Pressverbindung, wobei das Rohrende jedoch noch nicht verpresst ist,
- Figur 3: ein Schnitt entlang der Linie III-III der Figur 2 und
- Figur 4: ein Schnitt entlang der Linie IV-IV der Figur 2.

Die Pressverbindung weist einen Fitting 2 auf, von dem lediglich die eine Hälfte gezeigt ist. Die nicht gezeigte Hälfte kann ebenfalls für eine Pressverbindung ausgebildet sein. Sie kann aber auch beispielsweise ein Gewinde aufweisen oder ein Teil einer Armatur sein. Der Fitting 2 besteht beispielsweise aus Kunststoff oder Metall und weist einen Bund 2f und eine Schulter 2e als Anschlag für eine Schnittfläche 1e eines anzuschliessenden Endes 1a eines Rohres auf. Zwischen dem Bund 2b und der Schnittfläche 2e ist eine umlaufende Rille 2g angeordnet, in welche eine Presshülse 5 mit einem nach innen gerichteten Rand 5a eingreift. Der Rand 5a ist vorzugsweise in die Rille 2g eingeschnappt. Die Presshülse 5 kann am Fitting 2 vormontiert sein. In eine Aussenseite 2h des Fittings 2 ist eine umlaufende Nut 2a eingearbeitet, in die ein Dichtungsring 3 mit einem kreisrunden Querschnitt eingelegt ist. Der Aussendurchmesser d dieses Dichtungsringes 3 ist kleiner als der Innendurchmesser D des Rohres 1. Diesen Aussendurchmesser d ist zudem kleiner als der Aussendurchmesser E der Fläche 2h. Die Nut 2a ist durch zwei Rippen 2b begrenzt, an denen jeweils eine Vertiefung 2c anschliesst. Die Nut 2a befindet sich somit zwischen zwei Vertiefungen 2c und zwei unmittelbar anschliessenden Rippen 2b. Diese Rippen 2b sind wie ersichtlich so ausgebildet, dass der Dichtungsring 3 diese radial überragt.

Am freien Ende des Fittings 2 ist zudem eine umlaufende Vertiefung 2d angeordnet, die wie ersichtlich von der Presshülse 5 überdeckt ist. Das Rohr 1 ist aus einem kaltverformbaren Material hergestellt. Beispielsweise ist das Rohr 1 ein Verbundrohr mit einer Mittelschicht aus Aluminium. Solche Rohre 1 sind an sich bekannt.

Zum Herstellen der Verbindung wird das Rohrende 1a auf den Fitting 2 aufgeschoben, bis die Stirnfläche 1e an der Schulter 2e anliegt. Durch diese Anlage sowie die Führung der Fläche 2h wird das Rohrende 1a auf dem Fitting 2 zentriert. Beim Aufschieben wird der Dichtungsring 3 aufgrund des kleineren Aussendurchmessers d vom Rohrende 1a nicht berührt. Verletzungen am Dichtungsring 3 können deshalb nicht vorkommen. Dies auch bei nicht entgrateter Stirnfläche 1e. Die Presshülse 5 ist wie erwähnt vorzugsweise vormontiert. Das Rohrende 1a wird somit in die Presshülse 5 eingesteckt. Ist das Rohrende 1 auf dem Fitting 2 zentriert, so werden die Presshülse 5 und das Rohrende 1a plastisch verformt. Die Pressbacken des Presswerkzeuges 4 sind jeweils mit einer Kontur 4a am Bund 2f geführt. Wichtige Konturen 4c verpressen das Rohrende 1a sowie die Presshülse 5 im Bereich des Dichtungsringes 3. Ein mittlerer umlaufender Bereich 1b' deformiert hierbei den Dichtungsring 3 elastisch. Benachbarte Bereiche 1c' werden so deformiert, dass sie jeweils in eine Vertiefung 2c eingreifen und damit das Rohrende 1a am Fitting 2 fixieren. Die Deformation des Dichtungsringes 3 wird durch die benachbarten Rippen 2d begrenzt. Damit wird vermieden, dass der Dichtungsring 3 über den elastischen Bereich hinaus plastisch verformt wird. Eine plastische Verformung eines Dichtungsringes 3 ist ungünstig und beeinträchtigt die Dichtigkeit. Die Presshülse 5 verbessert die Fixierung des Rohrendes 1a am Fitting 2. Grundsätzlich ist aber auch eine Verbindung ohne eine solche Presshülse 5 denkbar. Weitere Konturen 4b verpressen die Presshülse 5 und das Rohrende 1 im Bereich der Vertiefung 2d. Der verpresste Bereich 1d' greift in diese Vertiefung 2d ein und erhöht die Festigkeit der Verbindung.

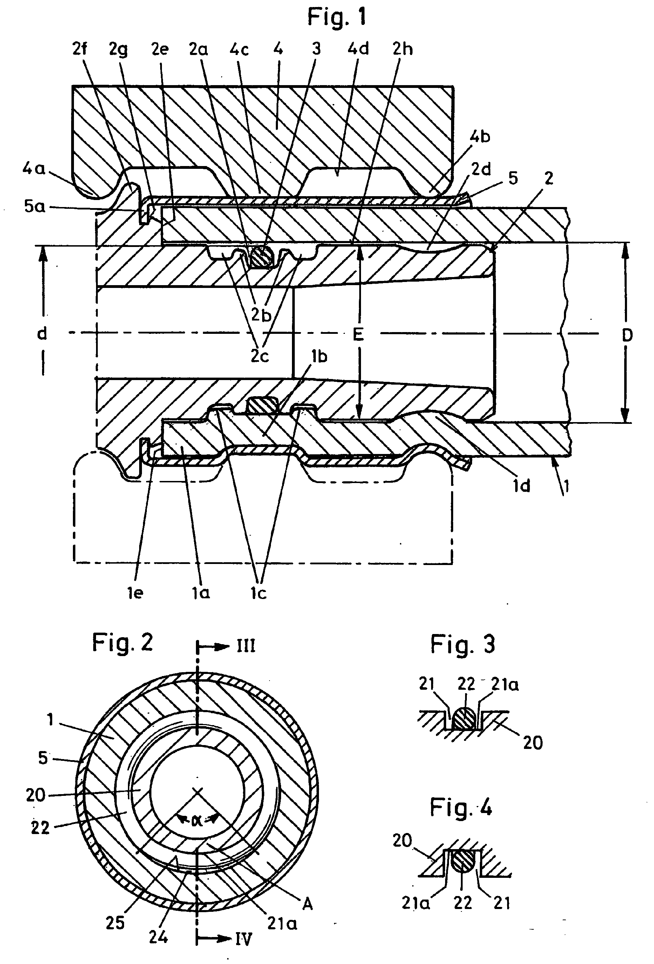

Bei der Variante gemäss Figur 2 ist ein Fitting 20 vorgesehen, in den eine Nut 21 eingearbeitet ist. In die Nut 21 ist ein Dichtungsring 22 eingelegt, der ebenfalls einen runden Querschnitt aufweist. Das in Figur 2 gezeigte Rohr 1 ist wie in Figur 1 gezeigt, auf den Fitting 20 aufgeschoben, hier jedoch noch nicht verpresst.

Die Nut 21 weist einen Nutengrund 21a auf, der im Querschnitt gemäss Figur 2 unrund ist. In der Figur 2 weist der Nutengrund 21a im Bereich des Winkel a, der etwa 90° beträgt, einen abgeflachten Bereich A auf. Ausserhalb dieses Bereichs A kann der Nutengrund 21a einen kreisförmigen Querschnitt aufweisen. Die Abflachung des Nutengrunds 21a im Bereich A hat zur Folge, dass der etwas gespannt in die Nut 21 eingelegte Dichtungsring 22 gemäss Figur 4 mit seinem Umfang unterhalb der Aussenseite 23 liegt und sich dadurch in diesem Bereich A bei aufgeschobenem aber noch nicht verpresstem Rohr 1 eine Leckage vorhanden ist. Die Leckage 24 ist ein Durchgang zwischen dem Dichtungsring 22 und der Innenseite 25 des Rohres 1. Ist das Rohr 1 nicht verpresst, so tritt bei einer Inbetriebnahme der Leitung durch die Leckage 24 Wasser aus, sodass bereits bei der Inbetriebnahme erkennbar ist, dass das Rohr 1 nicht verpresst wurde und damit keine dichte Verbindung vorliegt. Das Rohr 1 kann dann verpresst und damit die Leckage 24 aufgehoben werden.

## Patentansprüche

1. Pressverbindung zwischen einem Fitting (2) und einem auf den Fitting aufgeschobenen und kaltverformten Rohrende (1a), mit einem Dichtungsring (3, 22), der in eine Nut (21) auf der Aussenseite (2h) des Fittings (2) eingelegt und vom Rohrende (1a) elastisch deformiert ist, wobei der Aussendurchmesser (d) des nicht deformierten Dichtungsringes (3) wenigstens bereichsweise kleiner ist als der Innendurchmesser (D) des nicht deformierten Rohrendes (1a), **dadurch gekennzeichnet, dass** die genannte Nut (21) einen im Querschnitt des Fittings (2), unrunden Nutengrund (21a) aufweist.

2. Pressverbindung nach Anspruch 1, **dadurch gekennzeichnet, dass** der Fitting (2) eine Fläche (2h) mit einem Aussendurchmesser (E), der grösser ist als der Aussendurchmesser (d) des nicht deformierten Dichtungsringes (3) zur Zentrierung des Rohrendes (1a) aufweist.

3. Pressverbindung nach einem der Ansprüche 1 oder 2, **dadurch gekennzeichnet, dass** das Rohrende (1a) im Bereich des Dichtringes (3) radial nach innen verformt ist und der Dichtungsring (3) durch diese Verformung elastisch und abdichtend deformiert ist.

4. Pressverbindung nach einem der Ansprüche 1 bis 3, **dadurch gekennzeichnet, dass** in Achsrichtung des Fittings (2) gesehen vor und nach der Nut (2a) jeweils eine ringförmige Vertiefung (2c) angeordnet ist, in die ein kaltverformter Bereich (1c') des Rohrendes (1a') eingepresst ist.

5. Pressverbindung nach einem der Ansprüche 1 bis 4, **dadurch gekennzeichnet, dass** das Rohrende (1a') im Bereich des freien Endes des Fittings (2) einen zusätzlichen kaltverformten Bereich (1d') aufweist.

6. Pressverbindung nach einem der Ansprüche 1 bis 5, **dadurch gekennzeichnet, dass** das Rohrende (1a') von einer kaltverformten Presshülse (5) zusätzlich fixiert ist.

7. Pressverbindung nach Anspruch 6, **dadurch gekennzeichnet, dass** die Presshülse (5) an einem Bund (2f) des Fittings (2) befestigt, insbesondere aufgeschnappt ist.

8. Pressverbindung nach Anspruch 1, **dadurch gekennzeichnet, dass** der Nutengrund (21a) einen abgeflachten Bereich (A) aufweist.

9. Presswerkzeug und Fitting gemäss Anspruch 1 zur Herstellung einer Pressverbindung gemäss Anspruch 1, mit zwei Pressbacken, die an das zu verformende Rohrende (1a) mit halbkreisförmigen Pressflächen (4d) anzulegen sind und die zur Kaltverformung des Rohrendes (1a) schliessbar sind, wobei die Pressflächen (4d) eine erste Kontur (4a) für eine Führung der Pressbacken an einem Bund (2f) des Fittings (2) aufweist, **dadurch gekennzeichnet, dass** die Pressflächen (4d) eine zweite Kontur (4c) zum Kaltverformen des Rohrendes (1) im Bereich des Dichtungsringes (3) und eine dritte Kontur (4b) zum Kaltverformen des Rohrendes (1) an einem freien Ende des Fittings (2) aufweisen, wobei der Fitting (2) entsprechend dieser dritten Kontur (4b) an seiner Aussenseite eine umlaufende Vertiefung (2d) aufweist.

## Claims

1. Press-fit connection between a fitting (2) and a cold-formed pipe end (1a) pushed onto the fitting, having a sealing ring (3, 22) which is inserted in a groove (21) on the external face (2h) of the fitting (2) and elastically deformed by the pipe end (1a), and the external diameter (d) of at least certain regions of the non-deformed sealing ring (3) is smaller than the internal diameter (D) of the non-deformed pipe end (1a), **characterised in that** said groove (21) has a non-rounded groove base (21a) in the cross-section of the fitting (2).

2. Press-fit connection as claimed in claim 1, **characterised in that** the fitting (2) has a surface (2h) with an external diameter (E) that is bigger than the external diameter (d) of the non-deformed sealing ring (3) for centring the pipe end (1a).

3. Press-fit connection as claimed in one of claims 1 or 2, **characterised in that** the pipe end (1a) is deformed radially inwards in the region of the sealing ring (3) and the sealing ring (3) is elastically deformed to produce a seal as a result of this deformation.

4. Press-fit connection as claimed in one of claims 1 to 3, **characterised in that** a respective annular recess (2c) is disposed before and after the groove (2a) as viewed in the axial direction of the fitting (2), into which a cold-formed region (1c') of the pipe end (1a') is pressed.

5. Press-fit connection as claimed in one of claims 1 to 4, **characterised in that** the pipe end (1a') has an additional cold-formed region (1d') in the region of the free end of the fitting (2).

6. Press-fit connection as claimed in one of claims 1 to 5, **characterised in that** the pipe end (1a') is additionally secured by a cold-formed compression sleeve (5).

7. Press-fit connection as claimed in claim 6, **characterised in that** the compression sleeve (5) is secured to a collar (2f) of the fitting (2), in particular by a snap-fit connection.

8. Press-fit connection as claimed in claim 1, **characterised in that** the groove base (21a) has a flattened region (A).

9. Pressing tool and fitting as claimed in claim 1 for establishing a press-fit connection as claimed in claim 1, with two pressing jaws with semi-circular compression surfaces (4d) which are placed on the pipe end (1a) to be deformed and which can be closed in order to cold-form the pipe end (1a), which compression surfaces (4d) have a first contour (4a) for guiding the pressing jaws on a collar (2f) of the fitting (2), **characterised in that** the compression surfaces (4d) have second contour (4c) for cold-forming the pipe end (1) in the region of the sealing ring (3) and a third contour (4b) for cold-forming the pipe end (1) at a free end of the fitting (2), and the fitting (2) has a recess (2d) matching this third contour (4b) extending around its external face.

## Revendications

1. Assemblage par compression entre un raccord (2) et une extrémité de tube (1a) matricée à froid et poussée sur le raccord, comprenant une bague d'étanchéité (3, 22), qui est introduite dans une rainure (21) du côté extérieur (2h) du raccord (2) et qui est déformée élastiquement par l'extrémité de tube (1a), le diamètre extérieur (d) de la bague d'étanchéité non déformée (3) étant au moins en partie plus petit que le diamètre intérieur (D) de l'extrémité de tube non déformée (1a), **caractérisé en ce que** ladite rainure (21) présente un fond de rainure (21a) non rond dans la section transversale du raccord (2).

2. Assemblage par compression selon la revendication 1, **caractérisé en ce que** le raccord (2) présente une surface (2h) de diamètre extérieur (E), qui est supérieur au diamètre extérieur (d) de la bague d'étanchéité non déformée (3) en vue du centrage de l'extrémité de tube (1a).

3. Assemblage par compression selon l'une quelconque des revendications 1 ou 2, **caractérisé en ce que** l'extrémité de tube (1a) est déformée radialement vers l'intérieur dans la région de la bague d'étanchéité (3) et la bague d'étanchéité (3) est déformée élastiquement et hermétiquement par cette déformation.

4. Assemblage par compression selon l'une quelconque des revendications 1 à 3, **caractérisé en ce que**, vu dans la direction axiale du raccord (2) avant et après la rainure (2a), est disposé un renfoncement annulaire (2c) dans lequel est pressée une région (1c') matricée à froid de l'extrémité de tube (1a').

5. Assemblage par compression selon l'une quelconque des revendications 1 à 4, **caractérisé en ce que** l'extrémité de tube (1a') présente dans la région de l'extrémité libre du raccord (2) une région supplémentaire (1d') matricée à froid.

6. Assemblage par compression selon l'une quelconque des revendications 1 à 5, **caractérisé en ce que** l'extrémité de tube (1a') est fixée en outre par une gaine de compression (5) matricée à froid.

7. Assemblage par compression selon la revendication 6, **caractérisé en ce que** la gaine de compression (5) est fixée sur un épaulement (2f) du raccord (2), en particulier par encliquetage.

8. Assemblage par compression selon la revendication 1, **caractérisé en ce que** le fond de rainure (21a) présente une région aplatie (A).

9. Outil de compression et raccord selon la revendication 1, pour la fabrication d'un assemblage par compression selon la revendication 1, comprenant deux mâchoires de compression qui doivent être appliquée contre l'extrémité de tube (1a) à déformer, avec des faces de compression (4d) de forme semi-circulaire, et qui peuvent être fermées pour effectuer le matriçage à froid de l'extrémité de tube (1a), les faces de compression (4d) présentant un premier contour (4a) pour un guidage des mâchoires de pressage contre un épaulement (2f) du raccord (2), **caractérisés en ce que** les faces de compression (4d) présentent un deuxième contour (4c) pour le matriçage à froid de l'extrémité de tube (1) dans la région de la bague d'étanchéité (3) et un troisième contour (4b) pour le matriçage à froid de l'extrémité de tube (1) au niveau d'une extrémité libre du raccord (2), le raccord (2) présentant sur son côté extérieur un renfoncement périphérique (2d) correspondant à ce troisième contour (4b).
